# EUROPÄISCHE PATENTSCHRIFT

(11) **EP 3 838 075 B1**
(45) Veröffentlichungstag und Bekanntmachung des Hinweises auf die Patenterteilung: **20.09.2023**
(21) Anmeldenummer: 20207677.4
(22) Anmeldetag: 16.11.2020
(51) Int. Cl.: A47J 31/057, A47J 31/42

(54) **VORRICHTUNG ZUR ZUBEREITUNG EINES BRÜHGETRÄNKES**
DEVICE FOR PREPARING A BREWED DRINK
DISPOSITIF DE PRÉPARATION D'UNE BOISSON INFUSÉE

(30) Priorität: 20.12.2019 DE 102019135389
(43) Veröffentlichungstag der Anmeldung: 23.06.2021
(73) Patentinhaber: 10 X Innovation GmbH & Co. KG, 10961 Berlin (DE)
(72) Erfinder: KORTE, René, 30161 Hannover (DE)
(74) Vertreter: Dantz, Jan Henning

(56) Entgegenhaltungen:
- EP-A1- 3 158 902
- DE-A1-102018 114 588
- DE-U1- 29 502 596
- US-A1- 2016 296 061

## Beschreibung

Die vorliegende Erfindung betrifft eine Vorrichtung zur Zubereitung eines Brühgetränkes, insbesondere von Kaffee, nach dem Oberbegriff des Anspruches 1.

Die DE 201 00 865 U1 offenbart eine Kaffeemaschine mit einem Mahlwerk, bei dem Kaffeebohnen von einem Behälter dem Mahlwerk zugeleitet werden, um dann das gemahlene Kaffeemehl in einem Filterhalter aufzufangen. Der in der Kaffeemaschine montiert Filterhalter kann nach dem Befüllen mit Kaffeemehl mit heißem Wasser durchströmt werden, um den gebrühten Kaffee in eine Kanne unter dem Filterhalter aufzufangen. Auch wenn der gebrühte Kaffee auf Basis des frisch gemahlenen Kaffeemehls geschmacklich vorteilhaft ist, besteht der Nachteil, dass die Kaffeemaschine eine große Höhe und ein erhebliches Volumen besitzt. Zudem kann das Mahlwerk aufgrund von aufsteigendem Wasserdampf leicht verstopfen. Eine ähnliche Kaffeemaschine zeigt auch DE 295 02 596. Die DE 10 2018 114 588 A1 offenbart eine Kaffeemaschine mit einem Mahlwerk, das neben der Brüheinheit angeordnet ist.

Für die professionelle Zubereitung von Kaffee gibt es zudem Siebträgermaschinen, beispielsweise gemäß US 2016/0296061 A1, bei denen frisch gemahlener Kaffee in einem Siebträger aufgefangen wird, um dann den Siebträger mit dem frisch gemahlenen Kaffee an einem Wasserauslass einzuspannen, um dort unter Druck Kaffee zu brühen. Solche Maschinen sind meist an das Wasserleitungsnetz angeschlossen und daher für den privaten Gebrauch aufgrund des hohen Montageaufwandes ungeeignet.

Es ist daher Aufgabe der vorliegenden Erfindung, eine Vorrichtung zur Zubereitung eines Brühgetränkes zu schaffen, die eine Zubereitung von Kaffee mit frisch gemahlenem Kaffeemehl ermöglicht und kompakt aufgebaut ist.

Diese Aufgabe wird mit einer Vorrichtung mit den Merkmalen des Anspruches 1 gelöst.

Die erfindungsgemäße Vorrichtung umfasst eine Basisstation, in der eine Pumpe, eine Heizeinrichtung und eine Steuerung vorgesehen sind, und eine auf der Basisstation angeordnete Mahleinheit, die einen Behälter für Kaffeebohnen, ein Mahlwerk und einen Auslass für gemahlenes Kaffeemehl aufweist, einen auf der Basisstation lösbar angeordneten Tank für Frischwasser und eine von der Basisstation nach oben hervorstehende Zuleitung mit einem Auslass für erhitztes Wasser, der oberhalb eines Filterhalters angeordnet ist, wobei der Filterhalter von einer Position unterhalb des Auslasses für gemahlenes Kaffeemehl zu einer Position unterhalb des Auslasses bewegbar ist. Dadurch kann der Benutzer den Filterhalter zunächst unterhalb des Auslasses für gemahlenes Kaffeemehl positionieren und nach der Befüllung des Filterhalters den Filterhalter unter dem Auslass für erhitztes Wasser anordnen. Damit kann die Bauhöhe der Vorrichtung gering gehalten werden, da das Brühen von Kaffeemehl und das Befüllen des Filterhalters an unterschiedlichen Positionen des Filterhalters stattfindet. Zudem ist die Vorrichtung modular mit dem abnehmbaren Tank für Frischwasser aufgebaut, so dass die Handhabung auch für den privaten Gebrauch optimiert ist.

In einer bevorzugten Ausgestaltung ist die Basisstation im Wesentlichen plattenförmig ausgestaltet, beispielsweise als runde Scheibe mit einer ebenen Oberfläche, wobei die Höhe der Basisstation ohne die Zuleitung geringer als 5 cm sein kann, um einen geringen Aufbau zu besitzen. An der Basisstation sind dann die Schnittstellen zu dem Tank für Frischwasser und zu der Mahleinheit angeordnet. Die Basisstation kann dabei ein Gehäuse umfassen, in dessen Innenraum die Pumpe, die Heizeinrichtung und eine Steuerung integriert sind, so dass diese Bauteile von außen nicht sichtbar sind. Nur die nach oben hervorstehende Zuleitung, vorzugsweise ein rohrförmiger Körper steht dann wesentlich von der Basisstation hervor, beispielsweise mehr als 10cm.

In der erfindungsgemäßen Ausgestaltung ist die Mahleinheit lösbar an der Basisstation angeordnet und kann somit zu Reinigungszwecken oder zum Befüllen von der Basisstation abgenommen werden. Hierfür weist die Mahleinheit an einer Unterseite einen Stecker auf, der mit einem Verbindungsstecker an der Basisstation für eine elektrische Verbindung kontaktierbar ist. Dadurch kann die Mahleinheit nur dann betrieben werden, wenn diese auf der Basisstation mit dem Verbindungsstecker in Kontakt steht, was eine Fehlbetätigung vermeidet. Zudem können zwischen der Basisstation und er Mahleinheit auch Steuerleitungen vorgesehen sein, die beim Verbinden des Steckers mit dem Verbindungsstecker eine Steuerung der Mahleinheit ermöglichen.

Für eine optimale Aufstellung der Mahleinheit ist diese vorzugsweise um eine vertikale Achse drehbar auf der Basisstation positioniert. Dadurch kann die Ausrichtung des Auslasses für gemahlenen Kaffee frei gewählt werden und an die jeweilige Aufstellposition angepasst werden. Eine Drehbarkeit kann beispielsweise durch einen Verbindungsstecker an der Basisstation erreicht werden, der im Querschnitt im Wesentlichen kreisförmig ist und wahlweise nach oben von der Basisstation hervorsteht oder als Vertiefung eine Aufnahme zum Einfügen des Steckers der Mahleinheit ausbildet. Die Mahleinheit kann dabei optional auf der Basisstation über Rastmittel oder eine Klemmeinrichtung fixiert sein. Vorzugsweise wird hierfür mindestens ein Magnet eingesetzt, der dem Benutzer signalisiert, dass die Mahleinheit korrekt auf der Basisstation positioniert ist.

Die Mahleinheit weist bevorzugt einen Halter zum Anhängen eines Filterhalters auf, um das gemahlene Kaffeemehl in dem Filterhalter aufzufangen. Dadurch wird der Filterhalter exakt positioniert, und es wird ein Verschütten von Kaffeemehl vermieden. Der Halter kann dabei mit einer Wägezelle verbunden sein, um beim Mahlen von Kaffee das Gewicht des gemahlenen Kaffeemehls zu erfassen, der in den Filterhalter eingefüllt wird. Abhängig von dem erfassten Gewicht des eingefüllten Kaffeemehls kann dann die Mahleinheit bei Erreichen der gewünschten Menge automatisch abgeschaltet werden. Dies vereinfacht die Handhabung, wobei die Menge an Kaffeemehl optional über eine Steuerung an der Basisstation eingestellt werden kann.

Vorzugsweise ist auf der Basisstation mindestens eine Bedienfläche zum Steuern der Mahleinheit, des Mahlgrades und/oder der Wasserzuführung, insbesondere die Wassermenge, über die Zuleitung vorgesehen. Dadurch kann die Vorrichtung über die Basisstation mit unterschiedlichen Programmen gesteuert werden, so dass der Benutzer neben der Menge an zubereitetem Kaffee auch die Stärke einstellen kann, beispielsweise in Verbindung mit dem Mahlgrad. Dadurch kann eine Anpassung an den Geschmack des Benutzers erfolgen. Zudem ist es möglich, bei Anschalten der Mahleinheit zeitgleich oder zeitversetzt auch ein Vorheizen über die Heizeinrichtung vorzunehmen, um den Aufheizprozess zu verkürzen.

In einer vorteilhaften Ausgestaltung ist an der Zuleitung für das heiße Wasser in Montagehalter für den Filterhalter fixiert. Der Montagehalter kann dabei über eine Hülse mit einer Rohrleitung der Zuleitung verbunden sein, um über die Zuleitung einerseits die Zuführung von heißem Wasser zu ermöglichen und andererseits den Montagehalter abzustützen. Der Montagehalter kann dabei mit einer Steuerung der Basisstation auch über eine elektrische Leitung oder eine Steuerleitung verbunden sein, um ein Ventil an dem Filterhalter zum Ablassen oder Sammeln des im Filterhalter gebrühten Kaffees zu Öffnen oder zu schließen.

Vorzugsweise ist an einer wasserführenden Leitung hinter der Heizeinrichtung ein schaltbares Ventil vorgesehen, um das erhitzte Wasser wahlweise der Zuleitung oder dem Tank mit Frischwasser zuzuführen. Der Tank mit Frischwasser kann dabei über einen ersten Anschluss zum Ableiten von Wasser aus dem Tank und einen zweiten Anschluss zum Zuführen von erhitztem Wasser aus der Basisstation in den Tank mit der Basisstation verbunden sein. Dadurch kann über die Heizeinrichtung zunächst das Wasser in dem Wassertank vorgewärmt werden, beispielsweise bis zu einer mittleren Temperatur zwischen 40° und 60 °C, um dann das erhitzte Wasser weiter zu erhitzen und dann der Zuleitung und somit dem Brühprozess zuzuführen. Dies ermöglicht eine schnellere Zubereitung von Kaffee, wenn bereits vorgewärmtes Wasser verwendet wird. Das Vorwärmen kann dabei zeitlich zumindest teilweise parallel zu einem Mahlvorgang stattfinden.

Für ein optimiertes Brühergebnis kann die Zuleitung für das heiße Wasser eine erste Leitung für heißes Wasser zu einem ersten Auslass und eine zweite Leitung für heißes Wasser zu einem zweiten Auslass aufweisen. Die Leitungen können dabei jeweils als Rohrleitungen in einem Isolierkörper angeordnet sein. Die Rohrleistungen können dabei wahlweise abwechselnd oder auch zeitgleich mit heißem Wasser versorgt werden, um das Kaffeemehl möglichst großflächig zu benetzen und den Extraktionsprozess gleichmäßig durchzuführen. Durch den ersten und zweiten Auslass können unterschiedliche Bereiche des Kaffeemehls in dem Filterhalter benetzt werden.

Die Erfindung wird nachfolgend anhand eines Ausführungsbeispiels mit Bezug auf die beigefügten Zeichnungen näher erläutert. Es zeigen:

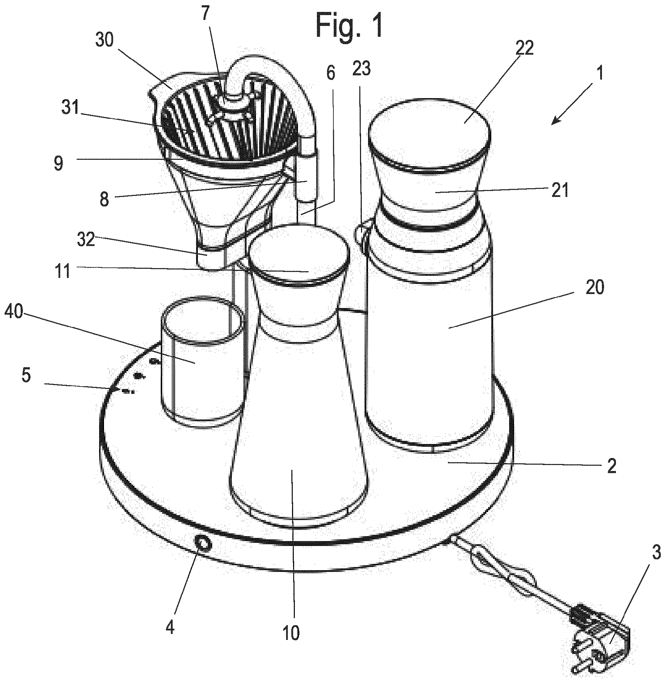

- Figur 1: eine perspektivische Ansicht der erfindungsgemäßen Vorrichtung;
- Figur 2: eine Seitenansicht der Vorrichtung der Figur 1 ;
- Figur 3: eine perspektivische Ansicht der Basisstation;
- Figur 4: eine Ansicht der Mahleinheit, und
- Figur 5: ein schematisches Schaubild der Vorrichtung der Figur 1.

Eine Vorrichtung 1 zur Zubereitung eines Brühgetränkes, insbesondere Kaffee, umfasst eine Basisstation 2, mit einem im Wesentlichen plattenförmigen Körper, der ein Gehäuse ausbildet. Die Basisstation 2 ist über einen Netzstecker 3 mit einer Stromversorgung verbunden. In dem Gehäuse der Basisstation 2 befinden sich eine Steuerung, mindestens eine Pumpe und eine Heizeinrichtung zum Erwärmen von Wasser. Die Basisstation 2 kann dabei über einen an einem Rand angeordneten Schalter 4 ein- und ausgeschaltet werden und weist an einer Oberseite ein Bedienfeld 5 auf, um bestimmte Parameter beim Brühvorgang automatisch zu steuern.

Auf der Basisstation 2 ist ein Tank 10 abnehmbar angeordnet, der über einen Deckel 11 verschlossen ist. Neben dem Tank 10 ist eine Mahleinheit 20 auf der Basisstation 2 abgestellt, die ebenfalls von der Basisstation 2 abnehmbar ist. Die Mahleinheit 20 ist dabei um eine vertikale Achse drehbar auf der Basisstation 2 angeordnet, so dass die Richtung eines Auslasses 23 für gemahlenes Kaffeemehl vom Benutzer beliebig vorgenommen werden kann. Die Mahleinheit 20 ist dabei vorzugsweise über Rastmittel, insbesondere mindestens einen Magneten, an der Basisstation 2 gehalten. Die Mahleinheit 20 umfasst einen Motor zum Antrieb des Mahlwerkes, sowie einen Behälter 21 für Kaffeebohnen, der über einen Deckel 22 verschlossen ist.

Auf der Basisstation 2 ist ferner eine von dem Körper der Basisstation 2 nach oben hervorstehende Zuleitung 6 für heißes Wasser vorgesehen, die sich zunächst vertikal nach oben erstreckt und dann U-förmig gebogen ist und an einem Auslass 7 mündet, der optional abnehmbar ist. Von dem Auslass 7 kann erhitztes Wasser in einen Filterhalter 30 eingeleitet werden, der einen Innenraum 31 aufweist, insbesondere einen trichterförmigen oder konusförmigen Innenraum, der an der Unterseite einen Auslass 32 aufweist, um gebrühten Kaffee in ein Gefäß 40, wie eine Tasse oder eine Kanne, abzuleiten. Der Filterhalter 30 ist dabei an einem Montagehalter 9 in einem vorbestimmten Abstand von der Oberfläche der Basisstation 2 angeordnet, beispielsweise zwischen 8 und 20 cm, insbesondere 10 bis 15 cm, um ein Gefäß 40 unter dem Filterhalter 30 abstellen zu können. Der Montagehalter 9 umfasst zwei Arme, die den Filterhalter 30 klemmend oder rastend umgreifen oder diesen lose abstützen. Auch andere Haltemittel können zur Fixierung des Filterhalters 30 eingesetzt werden. Der Montagehalter 9 ist über eine Hülse 8 an der Zuleitung 6 fixiert.

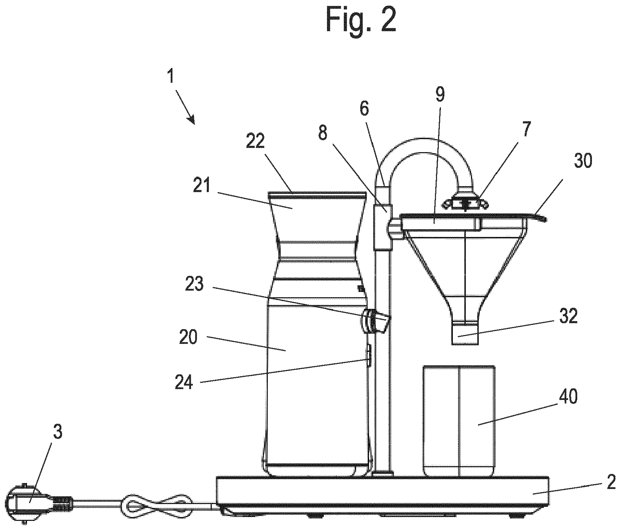

In Figur 2 ist erkennbar, dass die Mahleinheit 20 einen Halter 24 aufweist, der unterhalb des Auslasses 23 für gemahlenes Kaffeemehl angeordnet ist, wobei die Position des Halters 24 auch neben oder über dem Auslass 23 angeordnet sein kann. An dem Halter 24 kann der Filterhalter 30 mit einem Verbindungselement eingehängt werden, so dass das Gewicht des Filterhalters 30 an dem Halter 24 gehalten wird. Der Halter 24 ist vorzugsweise mit einer Wägezelle gekoppelt, die nach dem Einhängen des Filterhalters 30 erfasst, welche Menge an Kaffeemehl in den Filterhalter 30 eingefügt wird. Dadurch kann, abhängig von der eingestellten Kaffeestärke und der zu brühenden Wassermenge, bestimmt werden, welche Menge an Kaffeemehl in den Filterhalter 30 über die Mahleinheit 20 eingefüllt wird.

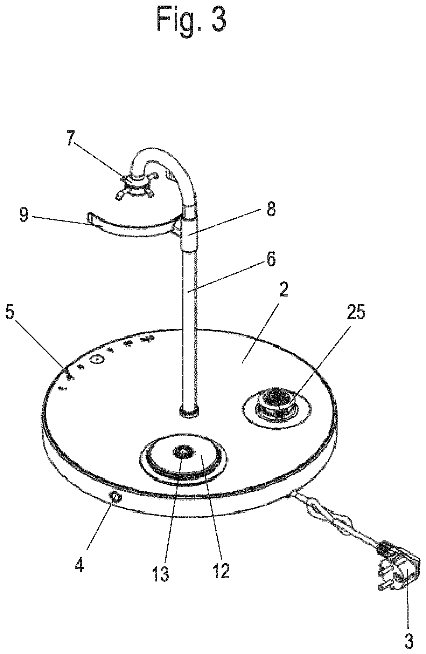

In Figur 3 ist die Basisstation 2 ohne die Mahleinheit 20 und den Tank 10 gezeigt. An der Oberseite der im Wesentlichen plattenförmigen Basisstation 2 befindet sich ein domförmiger Verbindungsstecker 25, beispielsweise ein zapfenförmiger Vorsprung, der einen Verbindungsstecker ausbildet und mit einem Stecker oder einer Buchse an der Unterseite der Mahleinheit 20 verbindbar ist, um die Mahleinheit 20 elektrisch mit der Basisstation 2 zu verbinden. Zudem können auch eine oder mehrere Steuerleitungen bei einer Kontaktierung verbunden werden. Durch den im Querschnitt kreisförmigen Verbindungsstecker 25 kann die Mahleinheit 20 um eine vertikale Achse gedreht werden und bleibt mit der Basisstation 2 elektrisch verbunden.

An der Oberseite der Basisstation 2 ist ferner ein Anschluss 12 zur Verbindung mit dem Tank 10 für Frischwasser vorgesehen, der mindestens eine Öffnung 13 aufweist, durch die das Wasser aus dem Tank 10 in die Basisstation 2 eingeleitet und dort erhitzt werden kann, um das erhitzte Wasser dann über die Zuleitung 6 und den Auslass 7 in den Filterhalter 30 zu fördern.

Das Bedienfeld 5 an der Basisstation 2 kann beispielsweise zur Einstellung der Stärke des Kaffees dienen und auch der Menge an zu brühendem Kaffee. Indirekt kann dadurch auch der Mahlgrad eingestellt werden.

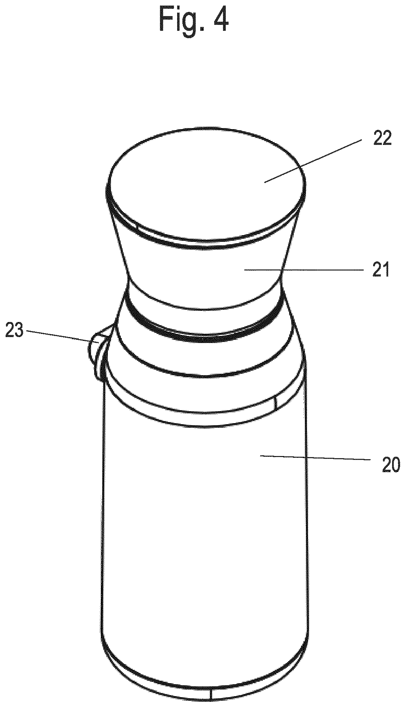

In Figur 4 ist die Mahleinheit 20 gezeigt. Die Mahleinheit 20 umfasst einen unteren, im Wesentlichen zylinderförmigen Abschnitt, in dem ein Motor für das Mahlwerk sowie eine Steuerung vorgesehen sein können. Darüber ist der Behälter 21 für Kaffeebohnen angeordnet, über den Kaffeebohnen in das Mahlwerk gefördert werden können, um dann das gemahlene Kaffeemehl an dem Auslass 23 auszugeben.

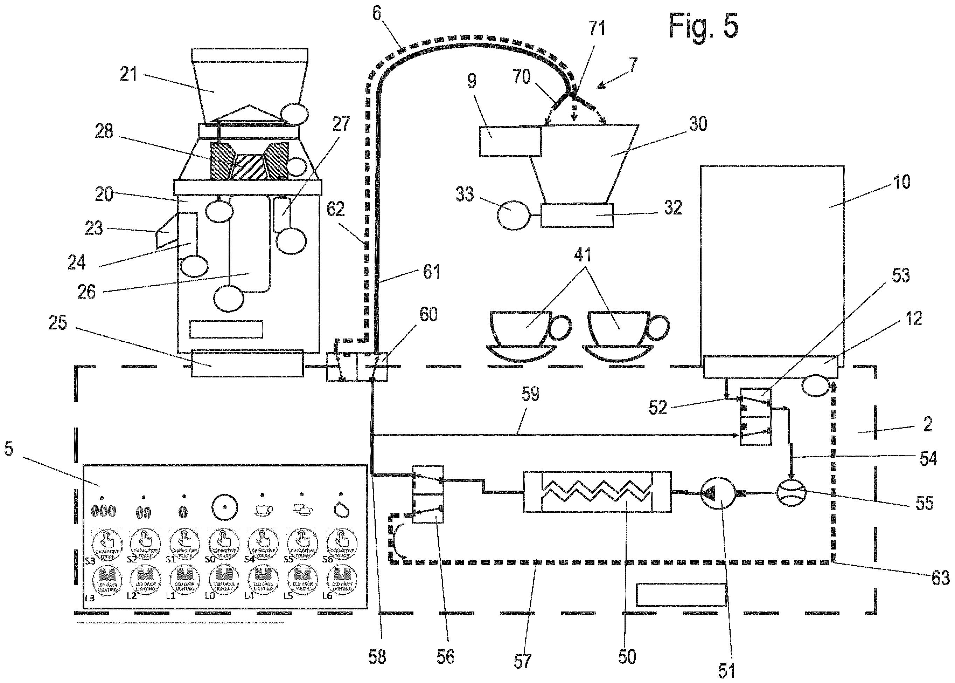

In Figur 5 ist ein Ablaufdiagramm der Vorrichtung 1 schematisch dargestellt. Der Tank 10 mit Frischwasser ist über den Anschluss 12 mit der Basisstation 2 verbunden, die durch den gestrichelten Rahmen dargestellt ist. Dabei ist ein Anschluss 12 über eine Leitung 52 und ein schaltbares Ventil 53, eine Leitung 54, ein Drosselelement 55 mit einer Pumpe 51 verbunden, so dass Wasser aus dem Tank 10 zu der Pumpe 51 angesaugt werden kann. Über die Pumpe 51 wird das Wasser durch eine schematisch dargestellte Heizeinrichtung 50 mit Heizwiderständen gefördert, um das vorgewärmte oder erhitzte Wasser zu einem Ventil 56 zu fördern. Das Ventil 56 ist zwischen zwei Positionen schaltbar. In einer ersten Position wird Wasser von der Heizeinrichtung 50 über eine Rückführleitung 63, die gestrichelt dargestellt ist, wieder über den Anschluss 12 in den Tank 10 für Frischwasser eingeleitet. Dadurch kann das Wasser in dem Tank 10 vorgewärmt werden, was beispielsweise zeitgleich oder zumindest teilweise zeitgleich zu dem Mahlvorgang stattfinden kann. Das Vorwärmen des Wassers in dem Tank 10 erfolgt vorzugsweise bis zu einer bestimmten Temperatur, beispielsweise zwischen 40° und 60°. Erst wenn eine bestimmte Vorlauftemperatur erreicht wird, kann das Ventil 56 in die zweite Position geschaltet werden, um das durch die Heizeinrichtung 51 durchgeleitete erhitzte Wasser über eine Leitung 58 der Zuleitung 6 zuzuführen.

In der Leitung 58 befindet sich ein weiteres Ventil 60, das das heiße Wasser wahlweise einer ersten Leitung 61 zu einem ersten Auslass 70 oder zu einer zweiten Leitung 62 zu einem zweiten Auslass 71 fördert. Der erste Auslass 70 kann beispielsweise einen Randbereich des Kaffeemehls in dem Filterhalter 30 benetzen, während der zweite Auslass 71 eher einen mittleren Bereich des Kaffeemehls in dem Filterhalter 30 benetzt. Die Auslässe 70 und 71 können zeitgleich oder abwechselnd angesteuert werden, um einen möglichst gleichmäßigen Extraktionsvorgang zu gewährleisten.

Die Leitung 58 ist ferner über eine Entleerungsleitung 59 mit dem Ventil 53 verbunden, so dass nach dem Brühvorgang noch vorhandenes Restwasser aus der Zuleitung 6 angesaugt und wieder in den Tank 10 für Frischwasser eingeleitet werden kann.

Auf der Basisstation 2 ist ferner die Mahleinheit 20 abgestellt, die über einen Verbindungsstecker 25 zur elektrischen Kontaktierung zur Stromversorgung und/oder Steuerung mit der Mahleinheit 20 verbunden ist. In der Mahleinheit 20 befindet sich ein Elektromotor 26, mit dem das Mahlwerk 28 angetrieben wird. Über das Mahlwerk 28 kann vorzugsweise der Mahlgrad eingestellt werden, um die Kaffeebohnen in dem Behälter 21 in der gewünschten Feinheit zu zermahlen. Hierfür kann eine entsprechende Einstellvorrichtung 27 vorgesehen sein, die über eine Steuerleitung ansteuerbar ist.

An der Mahleinheit 20 befindet sich ferner der Auslass 23 für gemahlenes Kaffeemehl und der Halter 24 zum Einhängen des Filterhalters 30. Der Halter 24 ist mit der Wägeeinheit verbunden, die optional ebenfalls mit der Steuerung in der Basisstation 2 gekoppelt sein kann.

In Figur 5 ist ferner noch das Bedienfeld 5 gezeigt, mittels dem gewisse Einstellungen zum Brühen von Kaffee vorgenommen werden können, insbesondere die Kaffeestärke und die Menge an gebrühtem Kaffee.

An dem Auslass 32 an der Unterseite des Filterhalters 30 können vorzugsweise zwei beabstandete Öffnungen vorgesehen sein, um optional auch gleichzeitig zwei Tassen 41 befüllen zu können. An dem Auslass 32 ist ein Ventil 33 vorgesehen, um eine Auslassöffnung an dem Filterhalter 30 wahlweise zu verschließen oder zu öffnen, um die Verweilzeit des heißen Wasser an dem Kaffeemehl beim Brühen einstellen zu können. Zudem wirkt das Ventil 33 als Tropfschutz. Das Ventil 33 kann über eine nicht dargestellte Stromversorgung über den Montagehalter 9 und die Zuleitung 6 mit der Basisstation 2 verbunden sein.

Zur Zubereitung von Kaffee wird zunächst der Tank 10 mit ausreichend Frischwasser gefüllt und anschließend eine Kaffeestärke an dem Bedienfeld 5 sowie die Wassermenge eingestellt. Der Filterhalter 30 wird vorzugsweise mit einem Filterpapiereinsatz gefüllt, der optional auch weggelassen werden kann, wenn der Filterhalter 30 ein entsprechendes Sieb aufweist. Der mit dem Filterpapiereinsatz gefüllte Filterhalter 30 wird dann an dem Halter 24 eingehängt, wobei der Halter 24 das Einhängen des Filterhalters 30 über einen Sensor erfassen kann, um dann automatisch mit dem Mahlvorgang zu starten. Alternativ kann der Mahlvorgang auch über eine Taste an dem Bedienfeld 5 eingeleitet werden. Sobald die gewünschte Menge an Kaffeemehl in den Filterhalter 30 eingefüllt wurde, stoppt die Mahleinheit 20 den Mahlvorgang. Während des Mahlvorganges kann das Wasser in dem Tank 10 über die Pumpe 51 und die Heizeinrichtung 50 vorgewärmt werden, beispielsweise zwischen 20° bis 50° über Raumtemperatur.

Der Filterhalter 30 wird nun von der Mahleinheit 20 entfernt und an dem Montagehalter 9 fixiert. Dann kann über das Drücken einer Taste oder automatisch das Einfüllen von heißem Wasser über die Zuleitung 6 erfolgen, wahlweise über einen einzigen Auslass 70 oder 71 oder wechselnd über mehrere Auslässe 70 und 71. Der gebrühte Kaffee wird dann bei Öffnen des Ventils 33 an dem Auslass 32 in die Tassen 41 oder andere Gefäße abgelassen.

In einer weiteren nicht dargestellten Ausführungsform kann an der Zuleitung 6 oberhalb des Filterhalters 30 ein Sensor angeordnet sein, mittels dem erfassbar ist, ob ein Filterhalter 30, insbesondere ein gefüllter Filterhalter, unter dem Auslauf 7 angeordnet ist. Dann kann eine Ausgabe von heißem Wasser an dem Auslass 7 über die Steuerung der Basisstation 2 verhindert werden, falls versehentlich kein Filterhalter 30 oder ein nicht mit Kaffeemehl gefüllter Filterhalter 30 unter dem Auslass 7 angeordnet ist. Ein solcher Sensor kann beispielsweise über optische Mittel eine Erkennung durchführen, beispielsweise indem Lichtstrahlen ausgegeben werden und die reflektierten Lichtstrahlen über einen optischen Sensor erfasst werden. Zumindest die Farbgebung unterhalb des Sensors lässt sich auf diese Weise erfassen. Auch andere Sensoren, beispielsweise Kontaktsensoren, können eingesetzt werden, um zu Erfassen, ob der Filterhalter 30 eingesetzt ist. Mit einem optischen Sensor lässt sich allerdings zusätzlich feststellen, ob der Filterhalter 30 mit Kaffeemehl befüllt ist.

### Bezugszeichenliste

- 1: Vorrichtung
- 2: Basisstation
- 3: Netzstecker
- 4: Schalter
- 5: Bedienfeld
- 6: Zuleitung
- 7: Auslass
- 8: Hülse
- 9: Montagehalter
- 10: Tank
- 11: Deckel
- 12: Anschluss
- 13: Öffnung
- 20: Mahleinheit
- 21: Behälter
- 22: Deckel
- 23: Auslass
- 24: Halter
- 25: Verbindungsstecker
- 26: Elektromotor
- 27: Einstellvorrichtung
- 28: Mahlwerk
- 30: Filterhalter
- 31: Innenraum
- 32: Auslass
- 33: Ventil
- 40: Gefäß
- 41: Tasse
- 50: Heizeinrichtung
- 51: Pumpe
- 52: Leitung
- 53: Ventil
- 54: Leitung
- 55: Drosselelement
- 56: Ventil
- 58: Leitung
- 59: Entleerungsleitung
- 60: Ventil
- 61: Leitung
- 62: Leitung
- 63: Rückführleitung
- 70: Auslass
- 71: Auslass

## Patentansprüche

1. Vorrichtung (1) zur Zubereitung eines Brühgetränkes, umfassend:
a) eine Basisstation (2), in der eine Pumpe (51), eine Heizeinrichtung (50) und eine Steuerung vorgesehen sind;
b) eine auf der Basisstation (2) angeordnete Mahleinheit (20), die einen Behälter (21) für Kaffeebohnen, ein Mahlwerk und einen Auslass (23) für gemahlenes Kaffeemehl aufweist;
c) einen auf der Basisstation (2) lösbar angeordneten Tank (10) für Frischwasser, und
d) eine von der Basisstation (2) nach oben hervorstehende Zuleitung (6) mit einem Auslass (7) für erhitztes Wasser, der oberhalb eines Filterhalters (30) angeordnet ist, wobei der Filterhalter (30) von einer Position unterhalb des Auslasses (23) für gemahlenes Kaffeemehl zu einer Position unterhalb des Auslasses (7) bewegbar ist,
**dadurch gekennzeichnet, dass** die Mahleinheit (20) lösbar an der Basisstation (2) angeordnet ist und an einer Unterseite einen Stecker aufweist, der mit einem Verbindungsstecker (25) an der Basisstation (2) für eine elektrische Verbindung kontaktierbar ist.

2. Vorrichtung nach Anspruch 1, **dadurch gekennzeichnet, dass** die Basisstation (2) im Wesentlichen plattenförmig ausgebildet ist.

3. Vorrichtung nach Anspruch 2, **dadurch gekennzeichnet, dass** die Basisstation (2) als runde Scheibe ausgebildet ist.

4. Vorrichtung nach einem der vorhergehenden Ansprüche, **dadurch gekennzeichnet, dass** die Mahleinheit (20) um eine vertikale Achse drehbar auf der Basisstation (2) positioniert ist.

5. Vorrichtung nach einem der vorhergehenden Ansprüche, **dadurch gekennzeichnet, dass** die Mahleinheit (20) einen Halter (24) zum Anhängen des Filterhalters (30) aufweist, um das gemahlene Kaffeemehl in dem Filterhalter (30) aufzufangen.

6. Vorrichtung nach Anspruch 5, **dadurch gekennzeichnet, dass** der Halter (24) mit einer Wägezelle verbunden ist und über eine Erfassung des Gewichts des eingefüllten gemahlenen Kaffeemehls in den Filterhalter (30) die Mahleinheit (20) abschaltbar ist.

7. Vorrichtung nach einem der vorhergehenden Ansprüche, **dadurch gekennzeichnet, dass** auf der Basisstation (2) mindestens eine Bedienfläche (5) zum Steuern der Mahleinheit (10), des Mahlgrades und/oder der Wasserzuführung über die Zuleitung (6) vorgesehen ist.

8. Vorrichtung nach einem der vorhergehenden Ansprüche, **dadurch gekennzeichnet, dass** an der Zuleitung (6) ein Montagehalter (9) für den Filterhalter (30) fixiert ist.

9. Vorrichtung nach Anspruch 8, **dadurch gekennzeichnet, dass** der Montagehalter (9) eine Hülse (8) aufweist, die an der rohrförmigen Zuleitung (6) festgelegt ist.

10. Vorrichtung nach einem der vorhergehenden Ansprüche, **dadurch gekennzeichnet, dass** an einer wasserführenden Leitung (58) hinter der Heizeinrichtung (50) ein schaltbares Ventil (56) vorgesehen ist, um das erhitzte Wasser wahlweise der Zuleitung (6) oder dem Tank (10) mit Frischwasser zuzuleiten.

11. Vorrichtung nach einem der vorhergehenden Ansprüche, **dadurch gekennzeichnet, dass** der Tank für Frischwasser über einen ersten Anschluss zum Ableiten von Wasser aus dem Tank (10) zu der Pumpe (51) und der Heizeinrichtung (50) und einem zweiten Anschluss zum Zuführen von Wasser in den Tank (10) von der Basisstation (2) verbunden ist.

12. Vorrichtung nach einem der vorhergehenden Ansprüche, **dadurch gekennzeichnet, dass** an der Zuleitung (6) eine erste Leitung (61) für heißes Wasser zu einem ersten Auslass (70) und eine zweite Leitung (62) für heißes Wasser zu einem zweiten Auslass (71) vorgesehen ist.

## Claims

1. Device (1) for preparing a brewed beverage, comprising:
a) a base station (2) in which a pump (51), a heater (50) and a controller are provided;
b) a grinding unit (20) arranged on the base station (2) and comprising a container (21) for coffee beans, a grinder and an outlet (23) for ground coffee;
c) a tank (10) for fresh water detachably arranged on the base station (2), and
d) a supply line (6) projecting upwardly from the base station (2) and having an outlet (7) for heated water arranged above a filter holder (30), the filter holder (30) being movable from a position below the outlet (23) for ground coffee to a position below the outlet (7),
**characterized in that** the grinding unit (20) is detachably arranged on the base station (2) and has a plug on an underside which can be contacted with a connecting plug (25) on the base station (2) for an electrical connection.

2. The device according to claim 1, **characterized in that** the base station (2) is substantially plate-shaped.

3. Device according to claim 2, **characterized in that** the base station (2) is designed as a round disk.

4. Device according to any one of the preceding claims, **characterized in that** the grinding unit (20) is positioned on the base station (2) rotatably about a vertical axis.

5. Device according to any one of the preceding claims, **characterized in that** the grinding unit (20) comprises a holder (24) for attaching the filter holder (30) to collect the ground coffee in the filter holder (30).

6. Device according to claim 5, **characterized in that** the holder (24) is connected to a load cell and the grinding unit (20) can be switched off by detecting the weight of the ground coffee filled into the filter holder (30).

7. Device according to one of the preceding claims, **characterized in that** at least one control panel (5) is provided on the base station (2) for controlling the grinding unit (20), the degree of grinding and/or the water supply via the supply line (6).

8. Device according to one of the preceding claims, **characterized in that** a mounting holder (9) for the filter holder (30) is fixed to the supply line (6).

9. A device according to claim 8, **characterized in that** the mounting holder (9) comprises a sleeve (8) fixed to the tubular supply line (6).

10. Device according to one of the preceding claims, **characterized in that** a switchable valve (56) is provided on a water-carrying line (58) downstream of the heater (50) for selectively supplying the heated water to the supply line (6) or to the tank (10) with fresh water.

11. Device according to any one of the preceding claims, **characterized in that** the tank for fresh water is connected via a first connection for discharging water from the tank (10) to the pump (51) and the heater (50) and a second connection for supplying water to the tank (10) from the base station (2).

12. Device according to any one of the preceding claims, **characterized in that** on the supply line (6) is provided a first line (61) for supplying hot water to a first outlet (70) and a second line (62) for supplying hot water to a second outlet (71).

## Revendications

1. Dispositif (1) pour préparer une infusion comprenant :
a) une station de base (2) avec une pompe (51), une installation de chauffage (50) et une commande,
b) un moulin (20) installé sur une installation de base (2) qui comporte un réceptacle (21) pour des grains de café, un broyeur et une sortie (23) pour le café moulu,
c) un réservoir (10) d'eau installé de manière amovible sur la station de base (2), et
d) une conduite d'alimentation (6) remontant à partir de la station de base (2) et ayant une sortie (7) pour de l'eau chaude, au-dessus d'un porte-filtre (30), ce porte-filtre (30) étant mobile entre une position sous la sortie (23) de la poudre de café moulu et une position sous la sortie (7),
dispositif **caractérisé en ce que** le moulin (20) est installé de manière amovible sur la station de base (2) et son côté inférieur comporte un connecteur qui peut se brancher au connecteur (25) de la station de base (2) pour assurer la liaison électrique.

2. Dispositif selon la revendication 1, **caractérisé en ce que** la station de base (2) a principalement la forme d'une plaque.

3. Dispositif selon la revendication 2, **caractérisé en ce que** la station de base (2) est un disque circulaire.

4. Dispositif selon l'une des revendications précédentes, **caractérisé en ce que** le moulin (20) peut tourner autour d'un axe vertical sur la station de base (2).

5. Dispositif selon l'une des revendications précédentes, **caractérisé en ce que** le moulin (20) comporte un support (24) pour accrocher le porte-filtre (30) et recevoir la poudre de café moulu dans le porte-filtre (30).

6. Dispositif selon la revendication 5, **caractérisé en ce que** le support (24) est relié à une cellule de pesée et la saisie du poids de la poudre de café moulu, introduite dans le porte-filtre (30) arrête le moulin (20).

7. Dispositif selon l'une des revendications précédentes, **caractérisé en ce que** la station de base (2) comporte au moins une surface de commande (5) pour commander le moulin (20), le degré de mouture et/ou l'alimentation en eau par la conduite d'alimentation (6).

8. Dispositif selon l'une des revendications précédentes, **caractérisé en ce que** un support de montage (9) du porte-filtre (30) est fixé à la conduite d'alimentation (6).

9. Dispositif selon la revendication 8, **caractérisé en ce que** le support de montage (9) comporte un manchon (8) fixé à la conduite tubulaire (6).

10. Dispositif selon l'une des revendications précédentes, **caractérisé par** une vanne commandée (56) est prévue dans la conduite d'alimentation en eau (58) en aval de l'installation de chauffage (50) pour fournir au choix de l'eau chaude de la conduite d'alimentation (6) ou à l'eau froide du réservoir (10).

11. Dispositif selon l'une des revendications précédentes, **caractérisé en ce que** le réservoir d'eau froide comporte un premier branchement pour diriger l'eau du réservoir (10) vers la pompe (51) et l'installation de chauffage (50) ainsi qu'un second branchement pour alimenter le réservoir (10) en eau de la station de base (2).

12. Dispositif selon l'une des revendications précédentes, **caractérisé en ce que** la conduite d'alimentation (6) comprend une première conduite (61) pour l'eau chaude vers une première sortie (70) et une seconde conduite (62) pour fournir l'eau chaude à une seconde sortie (71).
